# EUROPEAN PATENT APPLICATION

(11) **EP 4 730 740 A1**
(43) Date of publication of application: **22.04.2026**
(21) Application number: 25208816.6
(22) Date of filing: 15.10.2025
(51) Int. Cl.: H04L 43/0852, H04L 43/0882, H04L 43/0888, H04L 47/11, H04L 41/16

(54) **SYSTEM AND METHOD FOR DETECTING NETWORK FAILURES FOR MACHINE LEARNING WORKLOADS**

(30) Priority: 16.10.2024 US 202463707962 P
(71) Applicant: Google LLC, Mountain View, CA 94043 (US)
(72) Inventor: Raindel, Shachar, Mountain View, 94043 (US); Mishra, Bhavini, Mountain View, 94043 (US)
(74) Representative: Betten & Resch

(57) **Abstract**

Aspects of the disclosure are directed to detecting fail-slow conditions in a network executing machine learning applications. Detection may be performed by comparing, over short intervals of time, a load offered by the machine learning applications with network utilization. The load offered by the machine learning applications, sometimes referred to herein as the offered load, may be measured by instrumenting the machine learning application to share data at a time of requests. For example, the application may share data, such as an amount of information pending to be sent in association with the request, at a start time when the request starts and at an end time when the request ends.

## Description

### CROSS-REFERENCE TO RELATED APPLICATIONS

This application claims the benefit of the filing date of U.S. provisional patent application no. 63/707,962 filed October 16, 2024, the disclosure of which is hereby incorporated herein by reference.

### BACKGROUND

A fail-slow failure of a network fabric occurs where traffic is traversing the fabric at a rate or latency slower than expected. The fail-slow failures can be hard to detect. Moreover, since the failure only manifests as a slowdown, without any hard stops or explicit failure logging, identifying the source of the issue is difficult.

### BRIEF SUMMARY

Aspects of the disclosure are directed to detecting fail-slow conditions in a network executing machine learning applications. Detection may be performed by comparing, over short intervals of time, a load offered by the machine learning applications with network utilization. The load offered by the machine learning applications, sometimes referred to herein as the offered load, may be measured by instrumenting the machine learning application to share data at a time of requests. For example, the application may share data, such as an amount of information pending to be sent in association with the request, at a start time when the request starts and at an end time when the request ends.

One aspect of the disclosure provides a method, comprising receiving, at one or more processors, an indication of an offered load for one or more applications for a given time interval; receiving, at the one or more processors, network measurements for the given time interval; evaluating a magnitude of the offered load in view of a maximum bandwidth for a physical connection over which the offered load is sent; evaluating the received network measurements based on the evaluating of the offered load; and detecting possible fail-slow conditions based on the evaluating of the received network measurements.

In some examples, the method may further include determining, with the one or more processors, whether the offered load is greater than the maximum bandwidth for the physical connection. The network measurements may include latency, and evaluating the received network measurements may include determining, when the offered load is greater than the maximum bandwidth for the physical connection, whether latency exceeds a threshold. The possible fail-slow conditions may be detected when the offered load is greater than the maximum bandwidth and the latency exceeds the threshold. In some examples, the network measurements may include throughput, and evaluating the received network measurements may include determining, when the offered load is less than the maximum bandwidth for the physical connection, whether the throughput approximates a maximum possible throughput for the physical connection. The possible fail-slow conditions may be detected when the offered load is less than the maximum bandwidth and the throughput is less than the maximum possible throughput for the physical connection.

According to some examples, receiving the indication of the offered load may be automatically triggered by a request associated with the application. The application may be instrumented to cause the indication of offered load to be automatically triggered.

According to some examples, the given time interval may be less than 1 second. In some examples, the method may include dividing the time interval into a number of subintervals; dividing the offered load by the number of subintervals, producing a resulting load; and evaluating the resulting load for each of the number of subintervals.

Another aspect of the disclosure provides a system, comprising one or more processors configured to: receive an indication of an offered load for one or more applications for a given time interval; receive network measurements for the given time interval; evaluate a magnitude of the offered load based on a maximum bandwidth for a physical connection over which the offered load is sent; evaluate the received network measurements based on the evaluating of the offered load; and detect possible fail-slow conditions based on the evaluating of the received network measurements.

According to some examples, the one or more processors may be configured to determine whether the offered load is greater than the maximum bandwidth for the physical connection. The network measurements may include latency, wherein evaluating the received network measurements includes determining, when the offered load is greater than the maximum bandwidth for the physical connection, whether latency exceeds a threshold. The one or more processors may be configured to detect the possible fail-slow conditions when the offered load is greater than the maximum bandwidth and the latency exceeds the threshold. The network measurements may include throughput, wherein evaluating the received network measurements includes determining, when the offered load is less than the maximum bandwidth for the physical connection, whether the throughput approximates a maximum possible throughput for the physical connection. The one or more processors may be configured to detect the possible fail-slow conditions when the offered load is less than the maximum bandwidth and the throughput is less than the maximum possible throughput for the physical connection.

In some examples, receiving the indication of the offered load may be automatically triggered by a request associated with the application. The application may be instrumented to cause the indication of offered load to be automatically triggered. In some examples, the given time interval may be less than 1 second.

According to some examples, the one or more processors are configured to: divide the time interval into a number of subintervals; divide the offered load by the number of subintervals, producing a resulting load; and evaluate the resulting load for each of the number of subintervals.

Yet another aspect of the disclosure provides one or more non-transitory computer-readable storage media storing instructions that, when executed by one or more processors, causes the one or more processors to perform a method. Such method may include receiving an indication of an offered load for one or more applications for a given time interval; receiving network measurements for the given time interval; evaluating the offered load based on a maximum bandwidth for a physical connection over which the offered load is sent; evaluating the received network measurements based on the evaluating of the offered load; and detecting possible fail-slow conditions based on the evaluating of the received network measurements.

### BRIEF DESCRIPTION OF THE DRAWINGS

FIG. 1 is a block diagram of an example system for detecting fail-slow conditions in a network, according to aspects of the disclosure.
FIG. 2 illustrates an example of evaluating an offered load from an application, according to aspects of the disclosure.
FIG. 3 is a flow diagram of an example process of detecting fail-slow conditions in a network, according to aspects of the disclosure.
FIG. 4 is a flow diagram of another example process of detecting fail-slow conditions in a network, according to aspects of the disclosure.
FIG. 5 is a block diagram illustrating one or more models, such as for deployment in a datacenter housing a hardware accelerator on which machine learning models can be trained to perform detection of fail-slow conditions in a network, according to aspects of the disclosure.
FIG. 6 is a block diagram of an example computing environment for implementing the system of FIG. 1.

### DETAILED DESCRIPTION

### Overview

Aspects of the disclosure are directed to identifying network failure, including fail-slow conditions. The identifying may be performed by measuring, over short time windows, the load for network communication offered by a machine learning application. Also measured is the network bandwidth usage over the short time windows. If the network bandwidth usage is significantly smaller than the offered load, this may signal a possible fail-slow fabric issue. If the offered load, over the short time window, is much lower than a maximum wire speed, transaction latency may be inspected. Latency that is higher than expected for an empty system and the relevant message size may be due to a network fabric fail-slow issue.

### Example Systems

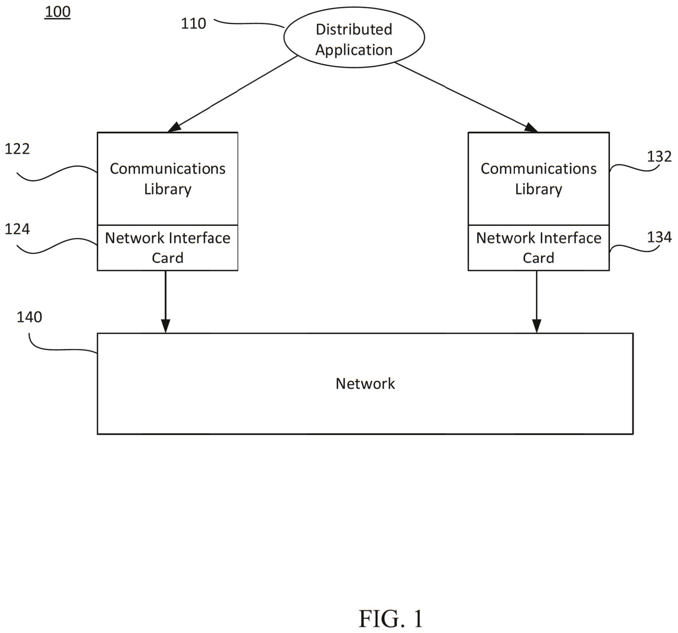

FIG. 1 is a block diagram of an example distributed system 100 for executing machine learning applications. The system 100 can be part of a cloud computing platform hosted at one or more datacenters and accessible to different users or organizations. The system may include, for example, a first worker using a first collective communication library 122 in communication with a first network interface controller (NIC) 124 and a network 140. The system may further include a second worker using second collective communication library 132 in communication with second NIC 134 and the network 140. The first and second workers may be in separate computing devices, separate datacenters, separate regions, etc.

Each of the first and second workers may include one or more processing units, such as graphics processing units (GPUs), and one or more communication interfaces for communication among the processing units. The workers may further include load balancers, interconnects between the processing units and other components, etc.

Machine learning application 110 may be executed in part by each of the first and second workers. The application may include, for example, one or more machine learning models.

Each of the first and second collective communication libraries 122, 132 may execute part of one or more collective operations of the application 110. The collective operations may include, for example, operations such as gather, reduce, send, receive, broadcast, scatter, etc. The collective operations may be executed by the respective collective communication libraries 122, 132. To perform the operations, the first collective communication library 122 and the second collective communication library 132 may share data over the network 140.

According to some examples, the application 110 may be instrumented such that for each share request, monitoring information is provided. The monitoring information may be provided to, for example, a controller within either network, within a machine on which either collective communication library 122 is installed, an external controller, etc. The monitoring information may include an indication of an amount of data to be sent, one or more timestamps, etc. For example, a first timestamp may indicate a start time of a request, and a second timestamp may indicate an end time of the request.

Based on the monitoring information, the system 100 may determine whether a fail-slow condition exists in the network 140 or in one or both NICs 124, 134. In a fail-slow situation, the network 140 or the NIC 124 or NIC 134 may be delaying or dropping some portion of traffic, thereby causing performance degradation. To detect such conditions, the system 100 may compare the amount of data to be sent with achieved throughput and/or latency measurements over a short period of time, and apply a set of evaluation criteria.

A first portion of the evaluation criteria may evaluate throughput. When measuring over a short period of time, such as one millisecond, if the application is offering load that is mostly bandwidth limited, it is expected that the bandwidth consumed over the short period of time would be near a maximum for the communication link, e.g., near wire speed. The offered load for the application may be bandwidth limited if the amount of data queued for transmission is significantly greater than [Network latency * BW].

A second portion of the evaluation criteria evaluates latency. If the application is offering load that is mostly latency limited, it is expected that a latency of each network transaction would approximate a minimal propagation delay of the system 100. The offered load may be considered as latency limited if the amount of data queued for transmission is significantly less than [Network latency * BW]. The minimal propagation delay of the system can be calculated based on topology and network technology used.

Based on the set of criteria, it may be determined whether the network is not performing as expected. For example, it may be detected if the network is operating with low bandwidth when data is pending transmission, or with high latency without a high temporary bandwidth load. Such indications can be used as a signal to trigger investigation into the system health, though it is also possible to trigger this signal by issues at the remote machine or the fabric.

The period of time over which bandwidth and latency are evaluated may be any amount of time. While one millisecond is mentioned in the example above, the amount of time may be, for example, an amount of several microseconds, several milliseconds, one or more seconds, etc.

By instrumenting the application to trigger automatic reporting of monitoring information when requests are sent, monitoring of potential fail-slow conditions can be performed efficiently and effectively. Because probe data is not needed to test for the fail-slow conditions, the processors in the system can provide reporting without having to process additional data, thereby reducing power consumption, reducing bandwidth consumption, preventing further network delays, and the like.

Though not expressly shown, the first and second computing worker nodes may include a number of hardware components. The specific number and type of hardware components can vary from example-to-example. A hardware component can refer to any processing device, memory or storage device, field programmable gate array (FPGA), link or memory access, or network device used to communicate data between components of the computing cluster. Example hardware components can include various types of hardware accelerators, random-access memories, and networking devices configured to communicate in accordance with one or more different network protocols. The hardware components can include one or more processors, one or more memory devices, and one or more network devices for communicating data among the hardware components.

Hardware components can implement one or more software components, such as software applications or scripts, computer program products, and portions of machine learning models for processing inference data and/or training data. Example software applications include large language model chat agents, generative data software using generative models, and so on. The machine learning model may be downloaded or copied, in some examples, or accessed through an API or other interface, in the same or other examples. Various engines, modules, or systems described herein can be implemented by the hardware components and/or using one or more different computing devices in one or more locations, not shown.

The machine learning model can be any type of machine learning model, such as deep neural networks, support vector machines, decision trees, and so on. For example, the machine learning model may be a foundation model, which can be trained and deployed on the worker nodes. The machine learning model may be used for a number of applications, such as for classification or generation tasks, based on received input.

The machine learning model can be sharded across the hardware components for training or executing the model according to a distributed computing approach. A shard of the machine learning model can refer to a portion of model parameter values, hyperparameter values, and/or operations to be performed as part of training or executing the machine learning model. How the machine learning model is sharded can vary, for example based on the type of parallelism used to execute or train the model across the hardware components. The system 100 can be configured to schedule and/or partition data or model shards for distributed processing, for example across the hardware components. Example types of parallelism include model parallelism, data parallelism, or pipeline parallelism.

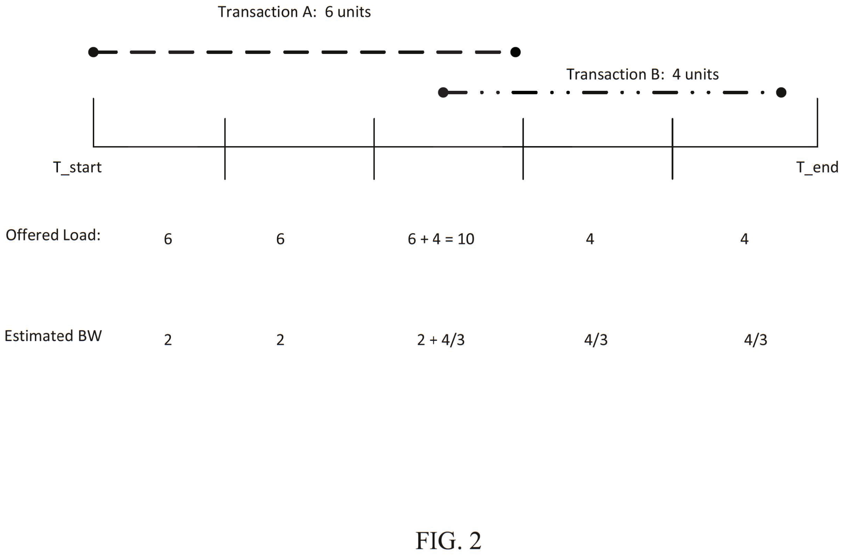

Fig. 2 illustrates an example of evaluating an offered load from an application against network utilization to determine whether a fail-slow condition exists. In monitoring information, the communications libraries 122, 132 provide an indication of an amount of information pending for transmission over the network between a start time (T_start) and an end time (T_end) for an interval. In some examples, the start time and end time may be associated with a start and end of a transaction. In other examples, the start time may be any other time for which a discrete monitoring event begins, and the end time can be any amount of time after the start time. The interval between the start and end time may be divided into one or more subintervals, and the amount of information pending for transmission over the network may be evaluated over each of the subintervals. Where multiple requests are pending between the start and end time, the information may be aggregated for evaluation over the subintervals. The evaluation may include comparing the amount of information for the interval or one or more of the subintervals to an achieved throughput and/or latency.

In the example of Fig. 2, the evaluation interval between the start time T_start and the end time T_end is divided into 5 subintervals. During the interval, two transactions are pending: Transaction A and Transaction B. Transaction A has a duration of 3 subintervals. An amount of information pending for Transaction A, also referred to as the offered load for Transaction A, is quantified in the illustration as 6 units. It should be understood that this is merely an example, and that in other implementations the offered load can be quantified in other units of measure, such as MB. In the illustration, Transaction B begins in the third subinterval and has an offered load of 4 units. During the third subinterval, both Transaction A and Transaction B are pending. Accordingly, the offered load for the third subinterval in this example is 6 + 4 = 10.

An estimated bandwidth for each subinterval may be determined using the transactions duration and the size of the transactions. It may be assumed that the transactions are transmitted at constant speed between the start and end time. Accordingly, the size of each transaction, divided by the number of subintervals over which the respective transaction is pending, is an estimate for the BW used by this transaction. In this example, the 6 units for Transaction A is divided by the first three subintervals, resulting in 2 units per subinterval. Transaction B is divided over the last three subintervals, resulting in 4/3 units per subinterval. Because the third subinterval includes both Transaction A and Transaction B, the estimated bandwidth for the third subinterval is 2 + 4/3.

The estimated bandwidth may be evaluated in view of a maximum possible bandwidth for the physical connection. For example, the estimated bandwidth may be compared to the maximum possible bandwidth, assessed as potentially meeting a metric such as a threshold percentage of the maximum possible bandwidth, evaluated using a mathematical formula involving the maximum possible bandwidth, etc. If the estimated bandwidth is greater than the maximum possible bandwidth for the physical connection, the transmission of the information pending for the application is bandwidth limited. In such instances, the bandwidth for each subinterval should approximate the maximum possible bandwidth for the physical connection.

If estimated bandwidth is relatively low based on the evaluation, though a larger amount of data is pending transmission, is expected that latency would also be low. In this regard, the latency of the transmission may be evaluated based on a minimal propagation delay for the system. The latency of the transmission may be measured by the time to receive acknowledgement or by leveraging timestamp values.

If the latency is relatively high, while the measured bandwidth is relatively low, an indication may be generated that the system is not performing as expected. The latency may be considered high if it is greater than [propagation delay + (message size / bandwidth) + queueing time].

According to some examples, fault detection logic may be represented as: if offered load > full wire speed * (interval - Max(Baseline RTT)), then the estimated bandwidth should approximate the full wire speed for the interval. If not, this may indicate a possible fail-slow condition. One exception may be the beginning or end of load segments, where the offered load may ramp up or down. If the interval size is larger than (maximum message size / full wire speed), such exceptions may be rare.

Full wire speed may be the maximum bandwidth the NIC can send theoretically. The baseline RTT may be a time between when the sender queued the message for transmission and a time when the sender processed the acknowledgement for successful reception, for a single byte over an empty network.

While Fig. 2 identifies some example values for the amount of information to be sent by the application and a time interval for evaluating transmissions, it should be understood that these values can change. For example, a duration of time between the start and end time for evaluation can be increased or decreased from the example shown. Using a relatively short period of time, such as less than a few seconds, ensures that potential fail slow conditions are not overlooked as a result of being aggregated with other network measurements over a longer period of time. In some cases, the interval may be less than 1 second. In some cases, the time interval for evaluation may be 100ms or less.

The evaluation of the network conditions may be performed at one or more processors within the network or outside of the network. For example, in some examples a centralized controller may receive the information reported by the communications library, through telemetry, etc., and perform the evaluation.

In some examples, a machine learning model may be employed for detecting the fail slow conditions. For example, the machine learning model may be trained using measurements of network information along with an offered load for an application. At inference, the machine learning model may be executed using monitoring information received from the communications library as a result of instrumenting the application.

### Example Methods

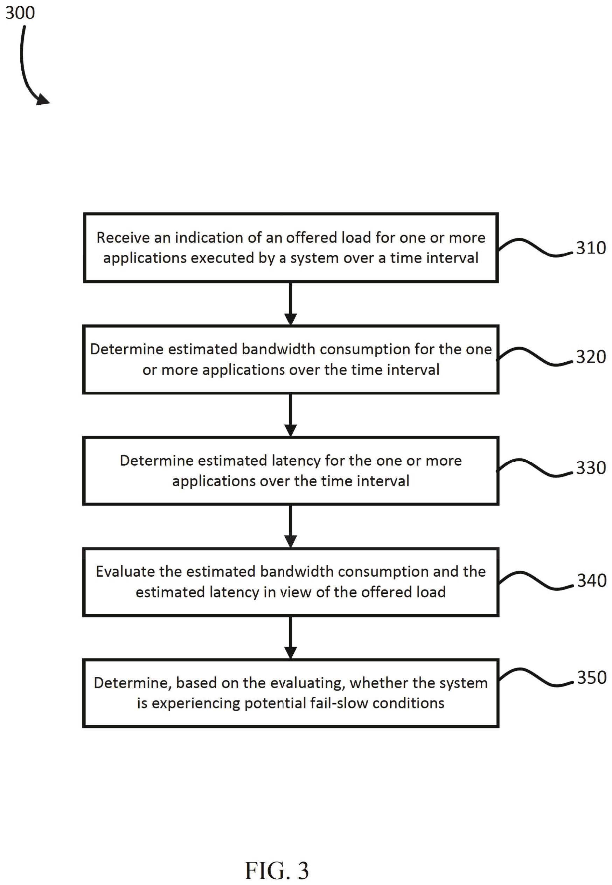

FIG. 3 is a flow diagram of an example process 300 for determining fail-slow conditions in a network. The example process can be performed on a system of one or more processors in one or more locations, such as in the processing system of FIG. 1. While the operations of methods and processes are described herein in a particular order, it should be understood that the order of operations may be modified and some operations may be performed simultaneously. Moreover, operations may be added or omitted.

In block 310, the system receives an indication of an offered load for one or more applications executed by the system for a time interval. The offered load may be an amount of data pending transmission for an application. In some examples, loads may be offered for transmission over the same connection by multiple applications at a given time. In such examples, the offered loads may be summed to produce a total offered load. The offered load may correspond to a specific relatively short time interval. For example, the time interval may be on the order of seconds, milliseconds, microseconds, etc.

Receipt of the indication of the offered load may be triggered by operations within one or more processors or machines executing the application. For example, the application may be instrumented such that a machine executing the application generates an indication of the offered load each time a request is queued or completed. The request may be, for example, a request to transfer data over the network. The indication may be generated by a component in the network stack, such as the collective library, network driver, etc.

In block 320, the system determines estimated bandwidth consumption for the one or more applications over the time interval. For example, the bandwidth may be determined based on information reported through telemetry. In some implementations, an indication of transfer completion may be used to determine the estimated bandwidth.

In block 330, the system determines estimated latency for the one or more applications over the time interval. For example, the latency may be determined using timestamps or a clock in the network stack or plugins to the network stack.

In block 340, the system evaluates the estimated bandwidth consumption and estimated latency in view of a magnitude of the offered load. For example, if the offered load is relatively large, but the estimated bandwidth consumption is relatively low compared to a maximum possible bandwidth and latency is relatively high, it may be determined (block 350) that the system is experiencing potential fail-slow conditions. As another possibility, if the offered load is relatively small but latency is relatively high, it may also be determined that the system is experiencing potential fail-slow conditions. If the latency is relatively high, it may be caused by the offered load size, which gives an upper bound to the queue length. Evaluating the offered load, bandwidth consumption, and/or estimated latency may include, for example, comparing the estimated bandwidth to the maximum possible bandwidth, considering a metric such as a threshold percentage of a maximum, applying a mathematical formula, etc.

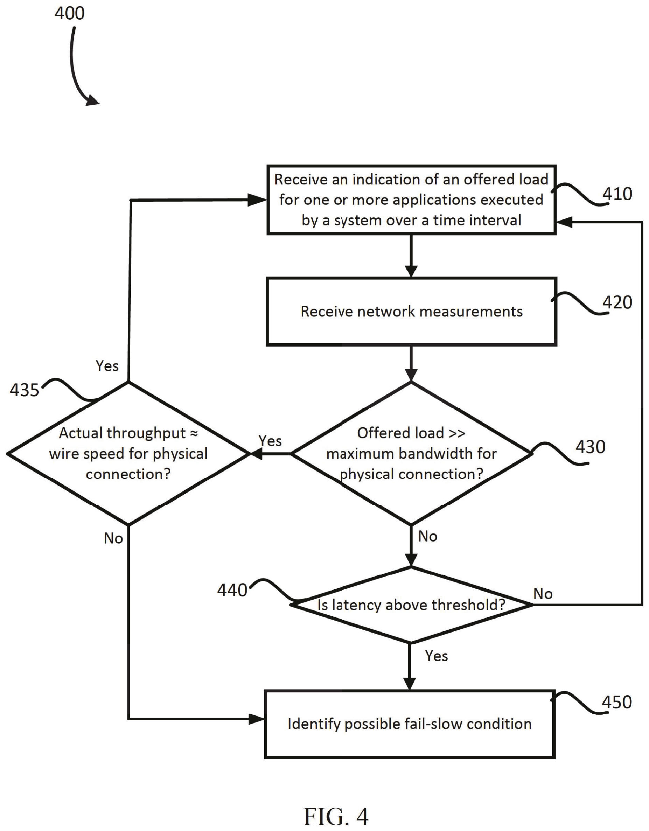

Fig. 4 illustrates a more detailed method 400 of determining whether the potential fail-slow conditions are present within a network.

In block 410, the system receives an indication of an offered load from one or more applications executed by the system over a time interval, similar to block 310 (Fig. 3).

In block 420, the system receives network measurements. Examples of such network measurements may include estimated latency and estimated throughput, though other network conditions may be considered. The measurements may be received through telemetry, a reporting protocol, or using other techniques.

In block 430, it is determined whether the offered load is greater than a maximum possible bandwidth for the physical connection. If it is, it is expected that the physical connection would be utilizing nearly all of its bandwidth in transmitting the information associated with the offered load. Based on such expectation, in block 435 it is determined whether the estimated throughput approximates a wire speed for the physical connection. If yes, it may be determined that the system is operating normally, though handling an excessive load. Accordingly, the method 400 may return to block 410 for further monitoring. If no, it may be determined that a possible fail-slow condition exists.

If the offered load is not significantly greater than the maximum bandwidth for the physical connection, the method may proceed to block 440 where latency is evaluated. In particular, it may be determined whether latency exceeds a given threshold corresponding to a relatively high latency for the system. If latency does not exceed the threshold, the method 400 may return to block 410 for further monitoring. If the latency does exceed the threshold, it may be determined that a possible fail-slow condition exists (block 450).

### Example Computing Environment

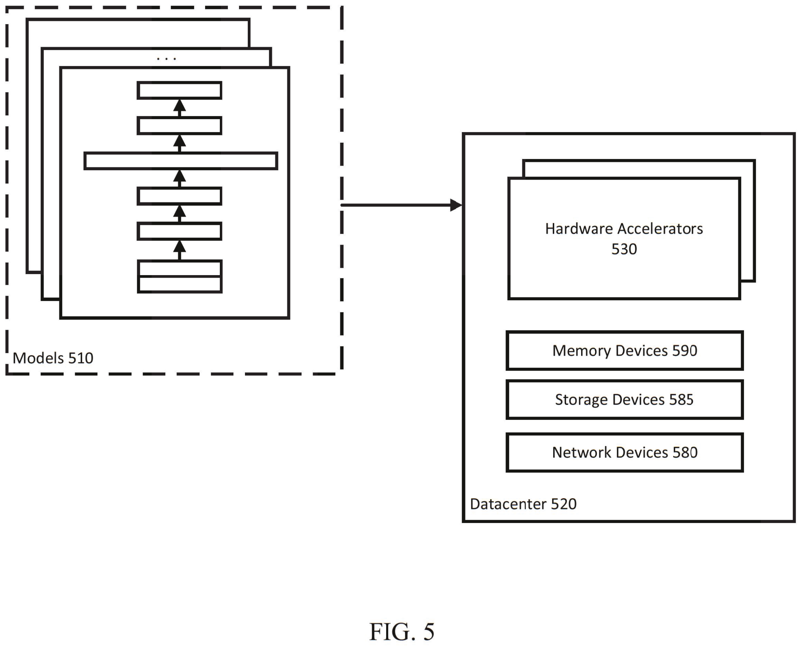

FIG. 5 is a block diagram illustrating one or more models 510, such as for deployment in a datacenter housing a hardware accelerator 530 on which the models can be trained with error simulation in hardware components of datacenter infrastructure, according to aspects of the disclosure. An architecture of a model can refer to characteristics defining the model, such as characteristics of layers for the model, how the layers process input, or how the layers interact with one another. For example, the model can be a convolutional neural network that includes a convolution layer that receives input data, followed by a pooling layer, followed by a fully connected layer that generates a result. The architecture of the model can also define types of operations performed within each layer. For example, the architecture of a convolutional neural network may define that rectified linear unit (ReLU) activation functions are used in the fully connected layer of the network. Other example architectures can include generative models, such as language models, foundation models, and/or graphical models. One or more model architectures can be generated that can be trained by the processing system 100, in accordance with aspects of the disclosure.

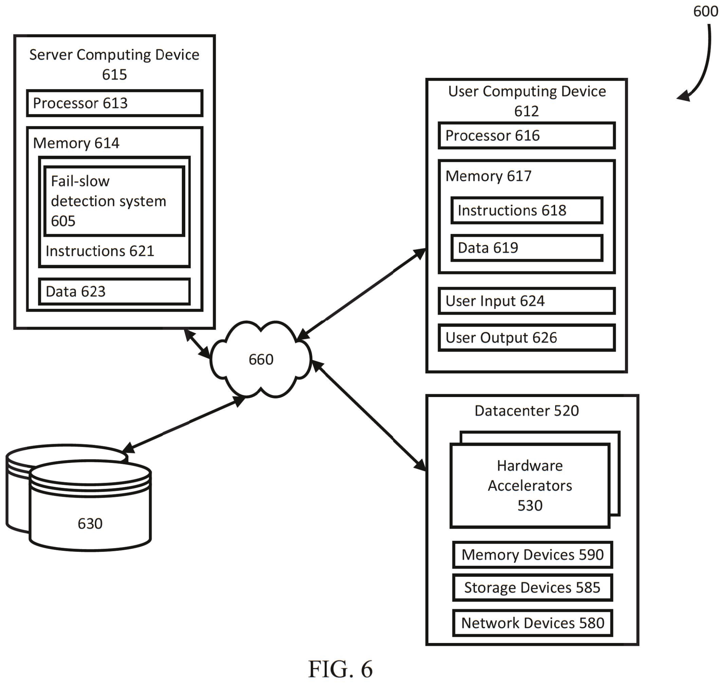

Datacenter 520 can include hardware components, such as hardware accelerators 530. The hardware accelerators 530 can be any type of processor, such as a central processing unit (CPU), graphics processing unit (GPU), field-programmable gate array (FPGA), data processing unit (DPU), infrastructure processing unit (IPU), or an application-specific integrated circuit (ASIC), such as a tensor processing unit (TPU). The hardware accelerators 530, as well as memory devices 590, storage devices 585, and/or network devices 580, described with reference to FIG. 6, are examples of hardware components used in a computing infrastructure.

FIG. 6 is a block diagram of an example computing environment 600 for implementing a fail-slow detection system 605. The fail-slow detection system 605 can be implemented on one or more devices having one or more processors in one or more locations, such as in server computing device 615. User computing device 612 and the server computing device 615 can be communicatively coupled to one or more storage devices 630 over a network 660. The storage device(s) 630 can be a combination of volatile and non-volatile memory and can be at the same or different physical locations than the computing devices 612, 615. For example, the storage device(s) 630 can include any type of non-transitory computer readable medium capable of storing information, such as a hard-drive, solid state drive, tape drive, optical storage, memory card, ROM, RAM, DVD, CD-ROM, non-volatile memory express (NVMe), write-capable, and read-only memories.

Aspects of the disclosure can be implemented in a computing system that includes a back-end component, e.g., as a data server, a middleware component, e.g., an application server, or a front-end component, e.g., user computing device 612 having a user interface, a web browser, or an app, or any combination thereof. The components of the system can be interconnected by any form or medium of digital data communication, such as a communication network. Examples of communication networks include a data center network (DCN), a local area network (LAN) and/or a wide area network (WAN), e.g., the Internet. The datacenter 520 can also be in communication with the user computing device 612 and the server computing device 615.

The computing system can include clients, e.g., user computing device 612 and servers, e.g., server computing device 615. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Other examples include transmitting data using remote procedure calls (RPCs) and/or frameworks based on RPCs, and REST API calls. Data generated at the client device, e.g., a result of the user interaction, can be received at the server from the client device.

The server computing device 615 can include one or more processors 613 and memory 614. The memory 614 can store information accessible by the processor(s) 613, including instructions 621 that can be executed by the processor(s) 613. The memory 614 can also include data 623 that can be retrieved, manipulated, or stored by the processor(s) 613. The memory 614 can be a type of non-transitory computer readable medium capable of storing information accessible by the processor(s) 613, such as volatile and non-volatile memory. The processor(s) 613 can include one or more central processing units (CPUs), graphic processing units (GPUs), field-programmable gate arrays (FPGAs), and/or application-specific integrated circuits (ASICs), such as tensor processing units (TPUs).

The instructions 621 can include one or more instructions that when executed by the processor(s) 613, causes the one or more processors to perform actions defined by the instructions. The instructions 621 can be stored in object code format for direct processing by the processor(s) 613, or in other formats including interpretable scripts or collections of independent source code modules that are interpreted on demand or compiled in advance. The instructions 621 can include instructions for implementing the processing system 605 consistent with aspects of this disclosure. The system 605 can be executed using the processor(s) 613, and/or using other processors remotely located from the server computing device 615.

The data 623 can be retrieved, stored, or modified by the processor(s) 613 in accordance with the instructions 621. The data 623 can be stored in computer registers, in a relational or non-relational database as a table having a plurality of different fields and records, or as JSON, YAML, proto, or XML documents. The data 623 can also be formatted in a computer-readable format such as, but not limited to, binary values, ASCII, or Unicode. Moreover, the data 623 can include information sufficient to identify relevant information, such as numbers, descriptive text, proprietary codes, pointers, references to data stored in other memories, including other network locations, or information that is used by a function to calculate relevant data.

The user computing device 612 can also be configured similarly to the server computing device 615, with one or more processors 616, memory 617, instructions 618, and data 619. For example, the user computing device 612 can be a mobile device, a laptop, a desktop computer, a game console, etc. The user computing device 612 can also include a user output 626, and a user input 624. The user input 624 can include any appropriate mechanism or technique for receiving input from a user, including acoustic input; visual input; tactile input, including touch motion or gestures, or kinetic motion or gestures or orientation motion or gestures; auditory input, speech input, etc., Example devices for user input 624 can include a keyboard, mouse or other point device, mechanical actuators, soft actuators, touchscreens, microphones, and sensors.

The server computing device 615 can be configured to transmit data to the user computing device 612, and the user computing device 612 can be configured to display at least a portion of the received data on a display implemented as part of the user output 626. The user output 626 can also be used for displaying an interface between the user computing device 612 and the server computing device 615. The user output 626 can alternatively or additionally include one or more speakers, transducers or other audio outputs, a haptic interface or other tactile feedback that provides non-visual and non-audible information to the platform user of the user computing device 612.

Although FIG. 6 illustrates the processors 613, 616 and the memories 614, 617 as being within the computing devices 615, 612, components described in this specification, including the processors 613, 616 and the memories 614, 617 can include multiple processors and memories that can operate in different physical locations and not within the same computing device. For example, some of the instructions 621, 618 and the data 623, 619 can be stored on a removable SD card and others within a read-only computer chip. Some or all of the instructions and data can be stored in a location physically remote from, yet still accessible by, the processors 613, 616. Similarly, the processors 613, 616 can include a collection of processors that can perform concurrent and/or sequential operation. The computing devices 615, 612 can each include one or more internal clocks providing timing information, which can be used for time measurement for operations and programs run by the computing devices 615, 612.

The server computing device 615 can be configured to receive requests to process data from the user computing device 612. For example, the environment 600 can be part of a computing platform configured to provide a variety of services to users, through various user interfaces and/or APIs exposing the platform services. One or more services can be a machine learning framework or a set of tools for training or executing generative AI models, foundation models, or other machine learning models according to a specified task and training data.

The devices 612, 615 can be capable of direct and indirect communication over the network 660. The devices 615, 612 can set up listening sockets that may accept an initiating connection for sending and receiving information. The network 660 itself can include various configurations and protocols including the Internet, World Wide Web, intranets, virtual private networks, wide area networks, local networks, and private networks using communication protocols proprietary to one or more companies. The network 660 can support a variety of short- and long-range connections. The short- and long-range connections may be made over different bandwidths, such as 2.402 GHz to 2.480 GHz (commonly associated with the Bluetooth^{®} standard), 2.4 GHz and 5 GHz (commonly associated with the Wi-Fi^{®} communication protocol); or with a variety of communication standards, such as the LTE^{®} standard for wireless broadband communication. The network 660, in addition or alternatively, can also support wired connections between the devices 612, 615, including over various types of Ethernet connection.

Although a single server computing device 615, user computing device 612, and datacenter 520 are shown in FIG. 6, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more engines or modules of computer program instructions encoded on one or more tangible non-transitory computer storage media for execution by, or to control the operation of, one or more data processing apparatus.

A computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus. A computer program may, but need not, correspond to a file in a file system. A computer program can be stored in a portion of a file that holds other programs or data, e.g., one or more scripts, in a single file, or in multiple coordinated files, e.g., files that store one or more engines, modules, sub-programs, or portions of code.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "engine" can refer to a software-based system, subsystem, or process that is programmed to perform one or more specific functions. The engine can be implemented as one or more software modules or components or can be installed on one or more computers in one or more locations. A particular engine can have one or more processors or computing devices dedicated thereto, or multiple engines can be installed and running on the same processor or computing device. In some examples, an engine can be implemented as a specially configured circuit, while in other examples, an engine can be implemented in a combination of software and hardware.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers. While operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the examples described above should not be understood as requiring such separation in all examples, and it should be understood that the described program components and systems can be integrated together in one or more software or hardware-based devices or computer-readable media.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, desktop computer, a personal digital assistant (PDA), a mobile audio or video player, a game console, a tablet, a virtual-reality (VR) or augmented-reality (AR) device, a Global Positioning System (GPS), or a portable storage device, e.g., a universal serial bus (USB) flash drive, as examples. Examples of the computer or special purpose logic circuitry can include the user computing device 612, the server computing device 615, or the hardware accelerators 530.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible examples. Further, the same reference numbers in different drawings can identify the same or similar elements.

## Claims

1. A method, comprising:
receiving, at one or more processors, an indication of an offered load for one or more applications for a given time interval;
receiving, at the one or more processors, network measurements for the given time interval;
evaluating a magnitude of the offered load in view of a maximum bandwidth for a physical connection over which the offered load is sent;
evaluating the received network measurements based on the evaluating of the offered load; and
detecting possible fail-slow conditions based on the evaluating of the received network measurements.

2. The method of claim 1, comprising determining, with the one or more processors, whether the offered load is greater than the maximum bandwidth for the physical connection.

3. The method of claim 2, wherein the network measurements comprise latency, and wherein evaluating the received network measurements comprises determining, when the offered load is greater than the maximum bandwidth for the physical connection, whether latency exceeds a threshold.

4. The method of claim 3, comprising detecting the possible fail-slow conditions when the offered load is greater than the maximum bandwidth and the latency exceeds the threshold.

5. The method of any one of claims 2 to 4, wherein the network measurements comprise throughput, and wherein evaluating the received network measurements comprises determining, when the offered load is less than the maximum bandwidth for the physical connection, whether the throughput approximates a maximum possible throughput for the physical connection.

6. The method of claim 5, comprising detecting the possible fail-slow conditions when the offered load is less than the maximum bandwidth and the throughput is less than the maximum possible throughput for the physical connection.

7. The method of any one of claims 1 to 6, wherein receiving the indication of the offered load is automatically triggered by a request associated with the application.

8. The method of claim 7, wherein the application is instrumented to cause the indication of offered load to be automatically triggered.

9. The method of any one of claims 1 to 8, wherein the given time interval is less than 1 second.

10. The method of any one of claims 1 to 9, comprising:
dividing the time interval into a number of subintervals;
dividing the offered load by the number of subintervals, producing a resulting load; and
evaluating the resulting load for each of the number of subintervals.

11. A system, comprising:
one or more processors configured to:
receive an indication of an offered load for one or more applications for a given time interval;
receive network measurements for the given time interval;
evaluate a magnitude of the offered load based on a maximum bandwidth for a physical connection over which the offered load is sent;
evaluate the received network measurements based on the evaluating of the offered load; and
detect possible fail-slow conditions based on the evaluating of the received network measurements.

12. The system of claim 11, wherein the one or more processors are further configured to perform the method of any one of claims 2 to 10.

13. One or more non-transitory computer-readable storage media storing instructions that, when executed by one or more processors, causes the one or more processors to perform the method according to any one of claims 1 to 10.

14. A computer program comprising instructions that, when executed by one or more processors, causes the one or more processors to perform the method according to any one of claims 1 to 10.
